**Europäisches Patentamt**

**European Patent Office**

**Office européen des brevets**

(19)

(11) Numéro de publication: **0 043 748**
**B1**

(12) **FASCICULE DE BREVET EUROPEEN**

(45) Date de publication du fascicule du brevet:
09.05.84

(51) Int. Cl.³: **C 04 B 7/44,** F 27 B 7/20

(21) Numéro de dépôt: 81400945.2

(22) Date de dépôt: 15.06.81

(54) Installation pour la fabrication de ciment par voie sèche avec four de précalcination.

(30) Priorité: **09.07.80 FR 8015236**

(43) Date de publication de la demande:
**13.01.82 Bulletin 82/2**

(45) Mention de la délivrance du brevet:
**09.05.84 Bulletin 84/19**

(84) Etats contractants désignés:
**BE CH DE GB IT LI LU NL**

(56) Documents cités:
**FR - A - 2 384 727**

(73) Titulaire: **FIVES-CAIL BABCOCK, Société anonyme, 7
rue Montalivet, F-75383 Paris Cedex 08 (FR)**

(72) Inventeur: **Dambrine, Francis, Résidence Dauphine rue
de la Croix Rouge, F-78430 Louveciennes (FR)**
Inventeur: **Ghestem, Gérard, 185, rue Clémenceau,
F-59211 Santes (FR)**

(74) Mandataire: **Fontanié, Etienne, FIVES-CAIL
BABCOCK 7, rue Montalivet, F-75383 Paris
Cedex 08 (FR)**

# Description

La présente invention concerne les installations pour la fabrication du ciment par voie sèche comportant un échangeur de chaleur à cyclones, un four de précalcination, un four de clinkérisation et un refroidisseur de clinker, dans lesquelles l'air chaud sortant du refroidisseur de clinker est utilisé comme air de combustion en partie dans le four de précalcination et en partie dans le four de clinkérisation et les fumées produites dans les deux fours sont utilisées dans l'échangeur à cyclones pour préchauffer les matières premières avant leur entrée dans le four de précalcination.

L'invention a trait plus particulièrement aux installations comportant un four de précalcination du type où les matières sont mises en suspension dans le courant d'air provenant du refroidisseur de clinker, le combustible est injecté sous forme finement divisée ou pulvérisée dans le flot des matières en suspension et les matières au moins partiellement calcinées sont entraînées hors de la chambre par les fumées et séparées de celles-ci dans un cyclone dont la sortie est reliée au circuit des gaz de l'échangeur soit entre le four et le dernier cyclone, en considérant le sens de circulation des matières, soit entre celui-ci et l'avant-dernier cyclone.

Dans ces installations, la circulation de l'air et des fumées est assurée par un seul groupe de ventilation dont l'aspiration est reliée à la sortie du premier cyclone de l'échangeur. Entre le refroidisseur de clinker et le point où la conduite raccordée à la sortie du cyclone associé au four de précalcination débouche dans l'échangeur à cyclones, les gaz suivent deux trajets parallèles constitués l'un par le four de calcination et une partie de l'échangeur, et l'autre par une conduite reliant le refroidisseur de clinker au four de précalcination, le four de précalcination et le cyclone qui lui est associé. Compte tenu du fait que le débit des gaz suivant le premier trajet est légèrement inférieur à celui suivant le second trajet et en raison du tracé de ces deux circuits parallèles, les pertes de charge sont nettement plus importantes sur le second trajet que sur le premier, en particulier parce que la conduite qui relie le refroidisseur de clinker au four de précalcination a une section beaucoup plus faible que celle du four rotatif de clinkérisation. Différents moyens ont été proposés pour égaliser les pertes de charge. L'emploi d'un ventilateur placé sur la conduite reliant le refroidisseur au four de précalcination s'est révélé impossible en pratique, car l'air circulant dans cette conduite est très chaud et chargé de poussières, ce qui provoque une détérioration très rapide du ventilateur. Une autre solution consiste à former un rétrécissement dans la gaine reliant le four de clinkérisation au dernier cyclone de l'échangeur pour augmenter les pertes de charge. Cette solution ne donne pas entière satisfaction car, la température des gaz dans la gaine de sortie du four étant élevée, certaines particules de matière subissent un début de fusion qui les rend collantes et il se forme sur la paroi de la gaine, au niveau du rétrécissement, des dépôts qui perturbent la marche de l'installation et nécessitent son arrêt pour le nettoyage.

Le but de l'invention est d'apporter à ce problème une solution nouvelle ne présentant pas les inconvénients des solutions connues.

L'invention a plus particulièrement pour objet une installation pour la fabrication du ciment par voie sèche comportant un échangeur de chaleur à cyclones 10, 10', 10'', un four de précalcination 12, 12' 12'' où les matières sont traitées en suspension dans un courant gazeux, un cyclone 14, 14', 14'' associé audit four et où les matières sont séparées des fumées du four, un four de clinkérisation 16, 16', 16'' et un refroidisseur de clinker 18, 18', 18'', les fumées des deux fours étant utilisées dans l'échangeur à cyclones pour préchauffer les matières premières et l'air chaud produit dans le refroidisseur de clinker étant utilisé en partie dans le four de précalcination et en partie dans le four de clinkérisation. Cette installation est caractérisée en ce que la sortie des gaz du cyclone 14, 14', 14'' associé au four de précalcination est reliée à l'entrée de l'avant-dernier cyclone 3, 3', 3'' de l'échangeur, un dispositif 46, 60, 14'' créant une perte de charge est placé sur le circuit des gaz de l'échangeur à cyclones entre le dernier 4, 4', 4'' et l'avant-dernier 3, 3', 3'' cyclone, et au moins une fraction des matières sortant du cyclone 2, 2', 2'' de l'échangeur précédant l'avant-dernier cyclone est introduite dans la conduite 42, 42', 62 reliant la sortie des gaz du cyclone 14, 14', 14'' associé au four de précalcination à l'entrée de l'avant-dernier cyclone de l'échangeur. Le dispositif créant la perte de charge peut être constitué par un rétrécissement 46 formé sur la conduite 22 reliant le dernier 4 et l'avant-dernier 3 cyclone de l'échangeur. Ce dispositif peut aussi être constitué par un cyclone supplémentaire 50 incorporé à l'échangeur à cyclones entre le dernier 4' et l'avant-dernier 3' cyclone. Il peut encore être constitué par le cyclone 14'' associé au four de précalcination 12'' qui est alors placé sur le circuit des gaz de l'échangeur, entre le dernier 4'' et l'avant-dernier 3'' cyclone.

L'invention a également pour objet une installation pour la fabrication du ciment par voie sèche comportant un échangeur de chaleur à cyclones 10', un four de précalcination 12', un four de clinkérisation 16' et un refroidisseur de clinker 18', l'échangeur étant formé de cinq cyclones 1', 2', 3', 50, 4' reliés en série de façon à être traversés successivement par les fumées du four de clinkérisation et, en sens inverse, par les matières à traiter, la sortie des matières du cinquième cyclone 4' de l'échangeur, en considérant le sens de circulation des matières à traiter, étant reliée à une conduite 38' amenant l'air du refroidisseur de clinker au four de précalcination, de sorte que ces matières sont introduites dans ce dernier en suspension dans le courant d'air, et les matières séparées des fumées dans un cyclone 14' associé au four de précalcination étant introduites dans le four de clinkérisation, caractérisée en ce que la sortie des gaz du cyclone 14' associé au four de précalcination est relié à l'entrée du troisième cyclone 3' de l'échangeur.

L'invention a encore pour objet une installation pour la fabrication du ciment par voie sèche comportant un échangeur de chaleur à cyclones 10'', un four de précalcination 12'', un four de clinkérisation 16'' et un refroidisseur de clinker 18'', l'échangeur étant formé de quatre cyclones 1'', 2'', 3'', 4'' reliés en série de façon à être traversés successivement par les fumées du four de clinkérisation et, en sens inverse, par les matières à traiter, la sortie des matières du dernier cyclone de l'échangeur, en considérant le sens de circulation des matières à traiter, étant reliée à une conduite 38'' amenant l'air du refroidisseur de clinker au four de précalcination, de sorte que les matières sont introduites en suspension dans le courant d'air, les matières séparées des fumées dans un cyclone 14'' associé au four de précalcination étant introduites dans le four de clinkérisation, et les matières sortant du troisième cyclone étant introduites dans une conduite 20'' reliant le four de clinkérisation à l'entrée du dernier cyclone 4'' de l'échangeur, caractérisée en ce que la sortie des gaz du dernier cyclone 4'' de l'échangeur est reliée à l'entrée du cyclone 14'' associé au four de précalcination 12'' et la sortie de ce cyclone est reliée à l'entrée du troisième cyclone 3'' de l'échangeur.

D'autres caractéristiques de l'invention apparaîtront à la lecture de la description qui suit et se réfère aux dessins l'accompagnant qui sont des schémas d'installations réalisées conformément à l'invention.

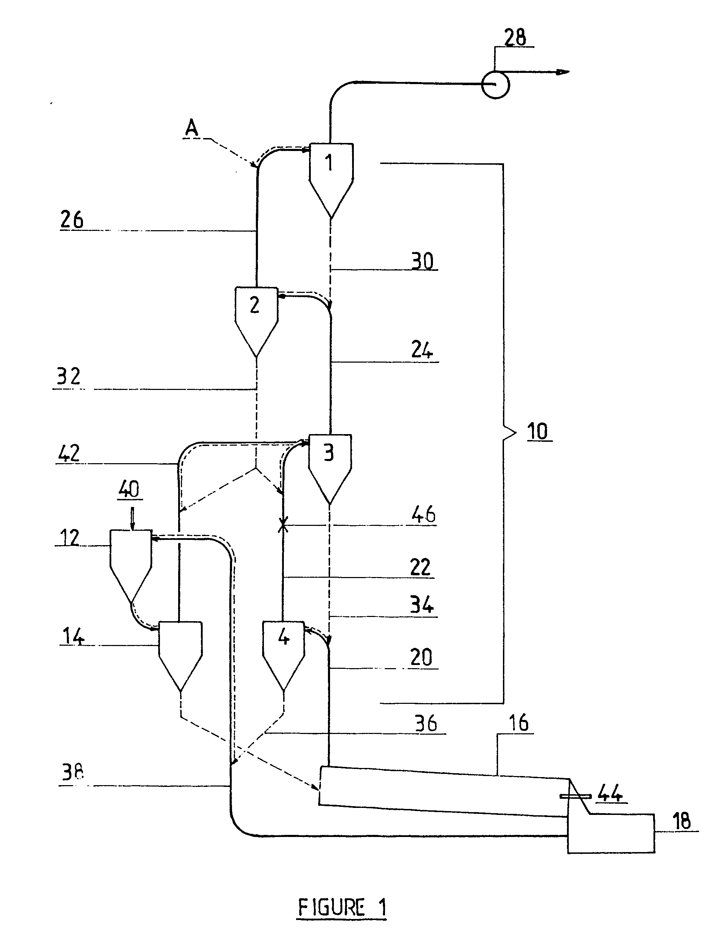

L'installation représentée schématiquement sur la fig. 1 est constituée essentiellement par un échangeur à cyclones 10, un four de précalcination 12 auquel est associé un cyclone 14, un four de clinkérisation 16 et un refroidisseur de clinker 18.

L'échangeur 10 est formé de quatre cyclones 1, 2, 3 et 4 placés à des niveaux différents et supportés par une tour. L'entrée du cyclone inférieur 4 est reliée par une conduite 20 au capot des fumées du four 16 et la sortie des gaz de chaque cyclone est reliée à l'entrée du cyclone placé au-dessus par une conduite 22, 24 ou 26, de sorte que les fumées du four 16 passent successivement dans les cyclones 4, 3, 2 et 1 et sont finalement rejetées dans l'atmosphère, après avoir été dépoussiérées, par un ventilateur de tirage 28. Des conduits 30, 32 et 34 pour l'évacuation des matières traitées sont raccordés à la pointe des cyclones 1, 2 et 3 et débouchent dans les conduites 24, 22 et 20, respectivement. Un conduit 36 est raccordé à la pointe du cyclone 4 débouche dans une conduite 38 reliant le refroidisseur de clinker 18 au four de précalcination 12. Les matières premières introduites en A, sous forme finement divisée, dans la conduite 26 passent ainsi successivement dans les cyclones 1, 2, 3 et 4 en étant mises en suspension dans les fumées, puis séparées de celles-ci dans les cyclones, de façon à réaliser un échange à contre-courant. Les matières séparées des fumées dans le cyclone 4 sont introduites dans la conduite 38 et transportées par l'air chaud qui y circule jusqu'au four de précalcination 12.

Le four 12 est constitué par une chambre de révolution, à axe vertical, dont la partie supérieure est cylindrique et la partie inférieure tronconique. Il comporte, à son extrémité supérieure, une entrée tangentielle à laquelle aboutit la conduite d'amenée d'air 38 et, à son extrémité inférieure, une sortie axiale reliée à l'entrée du cyclone 14. Un dispositif 40 pour l'injection d'un combustible solide ou liquide dans le four est placé sur le plafond de la chambre. Dans le four 12, le combustible brûle au contact de l'air en dégageant de la chaleur qui assure la décarbonatation au moins partielle des matières en suspension dans le courant d'air. Les fumées et les matières au moins partiellement décarbonatées sortent du four par son extrémité inférieure et entrent dans le cyclone 14 où les matières sont séparées des fumées pour être introduites dans le four 16. Les fumées du four de précalcination sont amenées par une conduite 42 à l'entrée du cyclone 3 où elles se mélangent aux fumées du four 16.

Le four 16 est un four tubulaire, rotatif, chauffé par un brûleur 44 placé à son extrémité aval, en considérant le sens de circulation des matières. L'air secondaire utilisé dans le four 16 provient du refroidisseur de clinker 18. L'air chaud produit dans le refroidisseur 18 doit être réparti entre les fours 12 et 16 dans des proportions bien déterminées; généralement, on utilisera 40 à 45% du débit d'air total dans le four 16 et 55 à 60% dans le four 12. Etant donné qu'on utilise un seul ventilateur 28 pour faire circuler les gaz dans le four 16, la conduite 20, le cyclone 4 et la conduite 22, d'une part, et la conduite 38, le four 12, le cyclone 14 et la conduite 42, d'autre part, les pertes de charge dans ces deux portions de circuit, pour les débits qui doivent y circuler, doivent être égales. Comme la section du four 16 est très supérieure à celle de la conduite 38, on prévoit dans la conduite 22 un rétrécissement 46 qui crée une perte de charge supplémentaire. L'aire de cette section rétrécie est choisie pour obtenir la répartition voulue des débits d'air entre les fours 12 et 16.

On peut noter que ce rétrécissement est situé dans une zone où, la température des fumées n'étant pas très élevée, il ne risque pas de se produire de dépôts risquant de perturber la marche de l'installation.

Comme représenté en tirets sur la fig. 1, une partie ou la totalité des matières extraites du cyclone 2 peut être introduite dans la conduite 42 reliant le cyclone 14 au cyclone 3.

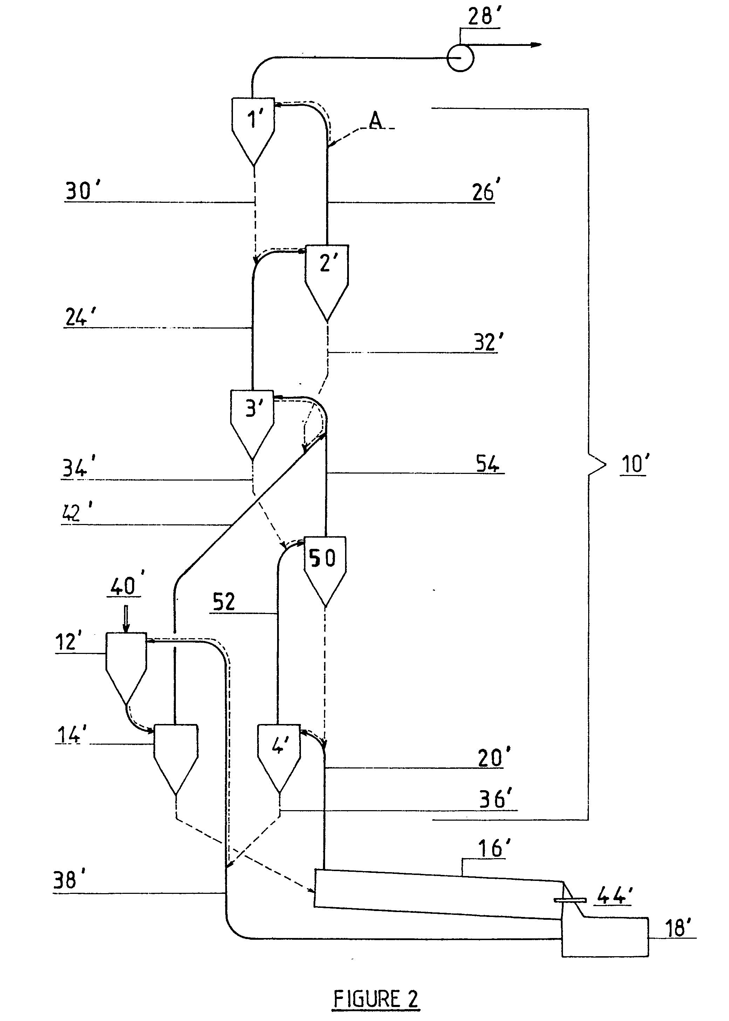

Dans l'installation de la fig. 2, la perte de charge supplémentaire sur le circuit des fumées du four 16' est créée par un cyclone supplémentaire 50 qui est incorporé à l'échangeur 10' et placé entre les cyclones 3' et 4'. L'entrée du cyclone 50 est reliée par une conduite 52 à la sortie du cyclone 4' et sa sortie est reliée par une conduite 54 à l'entrée du cyclone 3'. Le conduit d'évacuation des matières du cyclone 3' débouche dans la conduite 52 et le conduit d'évacuation des matières du cyclone 2′ débouche dans la conduite 54; des moyens peuvent être prévus pour diriger une partie ou la totalité du courant des matières sortant du cyclone 2′ vers la conduite 42′ qui relie le cyclone 14′ à l'entrée du cyclone 3′. Les caractéristiques du cyclone 50 sont choisies pour obtenir la répartition voulue des débits d'air entre les fours 12′ et 16′.

Le fonctionnement de cette installation est identique à celui de l'installation de la fig. 1 : les matières premières passent successivement dans les cyclones 1′, 2′ et 3′ et les conduites qui les relient, où elles sont chauffées par les fumées des fours 12′ et 16′, dans les cyclones 50 et 4′ et les conduites qui les relient, où elles sont chauffées uniquement par les fumées du four 16′, dans le four 12′ et le cyclone 14′, où elles sont au moins partiellement décarbonatées, dans le four 16′, où elles sont clinkérisées, et enfin dans le refroidisseur 18′.

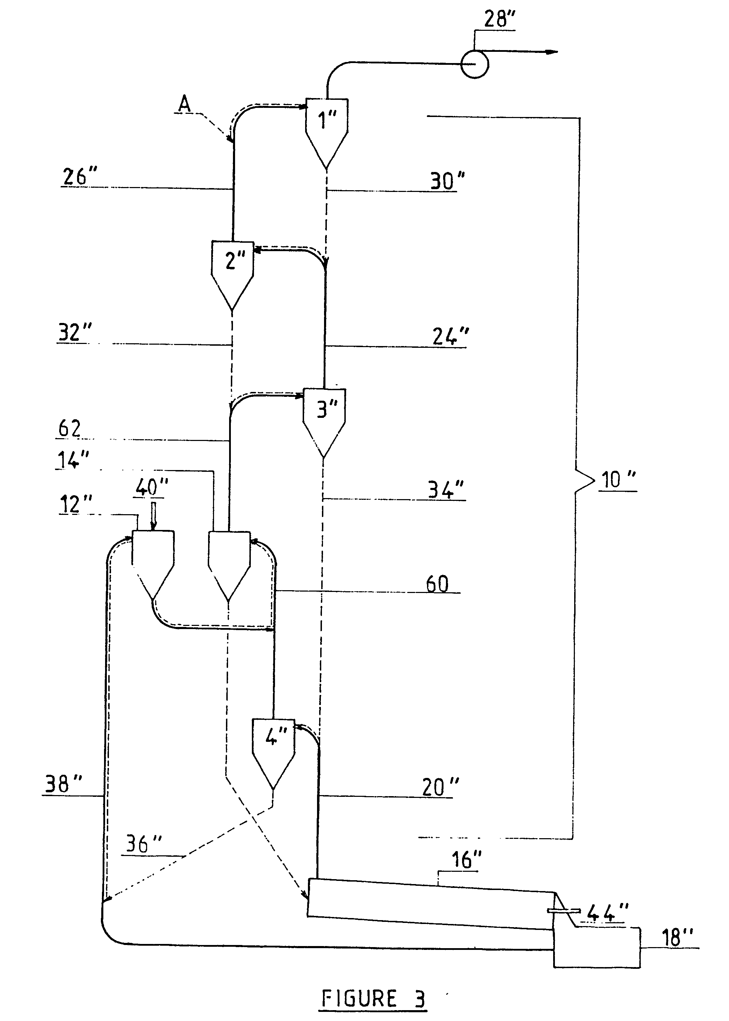

Dans l'installation de la fig. 3, on a créé une perte de charge supplémentaire sur le circuit des fumées du four 16″ en faisant passer celles-ci dans le cyclone 14″, avec les fumées du four 12″. Pour cela, on a relié la sortie des gaz du cyclone 4″ à l'entrée du cyclone 14″, par une conduite 60 à laquelle est reliée la sortie du four 12″, et la sortie des gaz du cyclone 14″ est reliée à l'entrée du cyclone 3″ par une conduite 62. Dans cette installation, le trajet suivi par les matières à traiter est identique à celui qu'elles suivent dans l'installation de la fig. 1. Dans ce cas, c'est en jouant sur les caractéristiques du cyclone 4″ qu'on obtient la répartition voulue de l'air entre les fours 12″ et 16″.

Des modifications peuvent être apportées aux installations décrites par la substitution de moyens techniques équivalents, et il doit être entendu que toutes ces modifications entrent dans le cadre de l'invention.

## Revendications

1. Installation pour la fabrication du ciment par voie sèche comportant un échangeur de chaleur à cyclones (10, 10′, 10″), un four de précalcination (12, 12′, 12″) où les matières sont traitées en suspension dans un courant gazeux, un cyclone (14, 14′, 14″) associé audit four et où les matières sont séparées des fumées du four, un four de clinkérisation (16, 16′, 16″) et un refroidisseur de clinker (18, 18′, 18″), les fumées des deux fours étant utilisées dans l'échangeur à cyclones pour préchauffer les matières premières et l'air chaud produit dans le refroidisseur de clinker étant utilisé en partie dans le four de précalcination et en partie dans le four de clinkérisation, caractérisée en ce que la sortie des gaz du cyclone (14, 14′, 14″) associé au four de précalcination est reliée à l'entrée de l'avant-dernier cyclone (3, 3′, 3″) de l'échangeur, un dispositif (46, 50, 14″) créant une perte de charge est placé sur le circuit des gaz de l'échangeur à cyclones entre le dernier (4, 4′, 4″) et l'avant-dernier (3, 3′, 3″) cyclone et au moins une fraction des matières sortant du cyclone (2, 2′,

2″) de l'échangeur précédant l'avant-dernier cyclone est introduite dans la conduite (42, 42′, 62) reliant la sortie des gaz du cyclone (14, 14′, 14″) associé au four de précalcination à l'entrée de l'avant-dernier cyclone de l'échangeur.

2. Installation selon la revendication 1, caractérisée en ce que le dispositif créant une perte de charge est constitué par un rétrécissement (46) formé sur la conduite (22) reliant le dernier (4) et l'avant-dernier (3) cyclone de l'échangeur.

3. Installation selon la revendication 1, caractérisée en ce que le dispositif créant une perte de charge est constitué par un cyclone supplémentaire (50) incorporé à l'échangeur à cyclones, entre le dernier (4′) et l'avant-dernier (3′) cyclone.

4. Installation selon la revendication 1, caractérisée en ce que le dispositif créant la perte de charge est constitué par le cyclone (14″) associé au four de précalcination (12″) qui est placé, sur le circuit des gaz de l'échangeur, entre le dernier (4″) et l'avant-dernier (3″) cyclone.

5. Installation selon l'une des revendications 1 ou 2, caractérisée en ce qu'une fraction au moins des matières sortant du deuxième cyclone (2) de l'échangeur est introduite dans la conduite (22) reliant le dernier et l'avant-dernier cyclone, en aval dudit rétrécissement (46).

6. Installation pour la fabrication du ciment par voie sèche comportant un échangeur de chaleur à cyclones (10′), un four de précalcination (12′), un four de clinkérisation (16′) et un refroidisseur de clinker (18′), l'échangeur étant formé de cinq cyclones (1′, 2′, 3′, 50, 4′) reliés en série de façon à être traversés successivement par les fumées du four de clinkérisation et, en sens inverse, par les matières à traiter, la sortie des matières du cinquième cyclone (4′) de l'échangeur, en considérant le sens de circulation des matières à traiter, étant reliée à une conduite (38′) amenant l'air du refroidisseur de clinker au four de précalcination, de sorte que ces matières sont introduites dans ce dernier en suspension dans le courant d'air, et les matières séparées des fumées dans un cyclone (14′) associé au four de précalcination étant introduites dans le four de clinkérisation, caractérisée en ce que la sortie des gaz du cyclone (14′) associé au four de précalcination est reliée à l'entrée du troisième cyclone (3′) de l'échangeur.

7. Installation selon la revendication 6, caractérisée en ce qu'une fraction au moins des matières sortant du deuxième cyclone (2′) de l'échangeur est introduite dans la conduite (42′) reliant la sortie des gaz du cyclone (14′) associé au four de précalcination à l'entrée du troisième cyclone (3′).

8. Installation pour la fabrication du ciment par voie sèche comportant un échangeur de chaleur à cyclones (10″), un four de précalcination (12″), un four de clinkérisation (16″) et un refroidisseur de clinker (18″), l'échangeur étant formé de quatre cyclones (1″, 2″, 3″, 4″) reliés en série de façon à être traversés successivement par les fumées du four de clinkérisation et, en sens inverse, par les matières à traiter, la sortie des matières du dernier cyclone de l'échangeur, en considérant le sens de circulation des matières à traiter, étant reliée à une conduite (38'') amenant l'air du refroidisseur de clinker au four de précalcination, de sorte que les matières sont introduites en suspension dans le courant d'air, les matières séparées des fumées dans un cyclone (14'') associé au four de précalcination étant introduites dans le four de clinkérisation et les matières sortant du troisième cyclone étant introduites dans une conduite (20'') reliant le four de clinkérisation à l'entrée du dernier cyclone (4'') de l'échangeur, caractérisée en ce que la sortie des gaz du dernier cyclone (4'') de l'échangeur est reliée à l'entrée du cyclone (14'') associé au four de précalcination (12'') et la sortie de ce cyclone est reliée à l'entrée du troisième cyclone (3'') de l'échangeur.

## Claims

1. Apparatus for the production of cement by the dry method consisting of a cyclone heat exchanger (10, 10', 10''), a precalcining kiln (12, 12', 12'') where the materials are processed in suspension in a gas flow, a cyclone (14, 14', 14'') associated with the said kiln and where the materials are separated from the kiln flue gases, a clinkerization kiln (16, 16', 16'') and a clinker cooler (18, 18', 18''), the flue gases from the two kilns being used in the cyclone heat exchanger to preheat the raw materials, and the hot air produced in the clinker cooler being used partly in the precalcining kiln and partly in the clinkerization kiln, characterized by the fact that the gas outlet of the cyclone (14, 14', 14'') associated with the precalcining kiln is connected to the inlet of the second to last cyclone (3, 3', 3'') of the heat exchanger, a device (46, 50, 14'') creating a pressure loss is included in the gas flow circuit of the cyclone heat exchanger between the last (4, 4', 4'') and the second to last (3, 3', 3'') cyclones, and at least part of the materials leaving the heat exchanger cyclone (2, 2', 2'') preceding the second to last cyclone is introduced into the pipe (42, 42', 62) connecting the gas outlet of the cyclone (14, 14', 14'') associated with the precalcining kiln to the inlet of the second to last cyclone of the heat exchanger.

2. Apparatus according to Claim 1, characterized by the fact that the device creating a pressure loss consists of a narrow section (46) in the pipe (22) connecting the last (4) and the second to last (3) cyclones of the heat exchanger.

3. Apparatus according to Claim 1, characterized by the fact that the device creating a pressure loss consists of an additional cyclone (50) built into the cyclone heat exchanger, between the last (4') and the second to last (3') cyclones.

4. Apparatus according to Claim 1, characterized by the fact that the device creating the pressure loss consists of the cyclone (14'') associated with the precalcining kiln (12'') which is located in the gas flow circuit of the heat exchanger, between the last (4'') and the second to last (3'') cyclones.

5. Apparatus according to Claim 1 or 2, characterized by the fact that at least part of the materials leaving the second cyclone (2) of the heat exchanger is introduced into the pipe (22) connecting the last and the second to last cyclones downstream of the said narrow section (46).

6. Apparatus for the production of cement by the dry method consisting of a cyclone heat exchanger (10'), a precalcining kiln (12'), a clinkerization kiln (16') and a clinker cooler (18'), the heat exchanger being composed of five cyclones (1', 2', 3', 50, 4') connected in series in such a manner that the flue gases from the clinkerization kiln pass through them in succession, as, in the opposite direction, do the materials to be processed, the outlet of the materials from the fifth cyclone (4') of the heat exchanger, when considering the flow direction of the materials to be processed, being connected to a pipe (38') which takes the clinker cooling air to the precalcining kiln, so that these materials are introduced into the latter in suspension in the air flow, and the materials separated from the flue gases in a cyclone (14') associated with the precalcining kiln being introduced into the clinkerization kiln, characterized by the fact that the gas outlet of the cyclone (14') associated with the precalcining kiln is connected to the inlet of the third cyclone (3') of the heat exchanger.

7. Apparatus according to Claim 6, characterized by the fact that at least part of the materials leaving the second cyclone (2') of the heat exchanger is introduced into the pipe (42') connecting the gas outlet of the cyclone (14') associated with the precalcining kiln to the inlet of the third cyclone (3').

8. Apparatus for the production of cement by the dry method consisting of a cyclone heat exchanger (10''), a precalcining kiln (12''), a clinkerization kiln (16'') and a clinker cooler (18''), the heat exchanger being composed of four cyclones (1'', 2'', 3'', 4'') connected in series in such a manner that the flue gases from the clinkerization kiln pass through them in succession, as, in the opposite direction, do the materials to be processed, the outlet of the materials from the last cyclone of the heat exchanger, when considering the flow direction of the materials to be processed, being connected to a pipe (38'') which takes the air from the clinker cooler to the precalcining kiln, so that the materials are introduced in suspension in the air flow, the materials separated from the flue gases in a cyclone (14'') associated with the precalcining kiln being introduced into the clinkerization kiln and the materials leaving the third cyclone being introduced into a pipe (20'') connecting the clinkerization kiln to the inlet of the last cyclone (4'') of the heat exchanger, characterized by the fact that the gas outlet of the last cyclone of the heat exchanger is connected to the inlet of the cyclone (14'') associated with the precalcining kiln (12''), and the outlet of this cyclone is connected to the inlet of the third cyclone (3'') of the heat exchanger.

## Patentansprüche

1. Anlage zum Herstellen von Zement nach dem Trockenverfahren, bestehend aus einem Zyklonwärmetauscher (10, 10', 10''), einem Vorkalzinierofen (12, 12', 12''), in dem das Material schwebend in einer Gasströmung aufbereitet wird, einem Zyklon (14, 14', 14''), der an den Vorkalzinierofen angeschlossen ist und in dem das Material von den Ofenrauchgasen abgeschieden wird, einem Klinkerofen (16, 16', 16'') und einem Klinkerkühler (18, 18', 18''), wobei die Rauchgase aus den beiden Öfen im Zyklonwärmetauscher für die Vorwärmung des Rohmaterials verwendet werden und die im Klinkerkühler erzeugte Warmluft teilweise im Vorkalzinierofen und teilweise im Klinkerofen verwendet wird, dadurch gekennzeichnet, dass der Gasaustritt des an den Vorkalzinierofen angeschlossenen Zyklons (14, 14', 14'') mit dem Eintritt des vorletzten Zyklons (3, 3', 3'') des Wärmetauschers verbunden ist, eine einen Druckverlust erzeugende Vorrichtung (46, 50, 14') im Gaskreislauf des Zyklonwärmetauschers zwischen dem letzten (4, 4', 4'') und dem vorletzten Zyklon (3, 3', 3'') angeordnet ist und mindestens ein Teil des aus dem dem vorletzten Zyklon vorgeschalteten Zyklon (2, 2', 2'') des Wärmetauschers austretenden Materials in die Leitung (42, 42', 62) eingeführt wird, die den Gasaustritt des an den Vorkalzinierofen angeschlossenen Zyklons (14, 14', 14'') mit dem Eintritt des vorletzten Zyklons des Wärmetauschers verbindet.

2. Anlage nach Anspruch 1, dadurch gekennzeichnet, dass die den Druckverlust erzeugende Vorrichtung aus einer Verengung (46) in der den letzten (4) und den vorletzten Zyklon (3) des Wärmetauschers verbindenden Leitung (22) besteht.

3. Anlage nach Anspruch 1, dadurch gekennzeichnet, dass die den Druckverlust erzeugende Vorrichtung aus einem zusätzlichen Zyklon (50) besteht, der zu dem Wärmetauscher gehört und zwischen dem letzten (4') und dem vorletzten Zyklon (3') angeordnet ist.

4. Anlage nach Anspruch 1, dadurch gekennzeichnet, dass die den Druckverlust erzeugende Vorrichtung aus dem an den Vorkalzinierofen (12'') angeschlossenen Zyklon (14'') besteht, der im Gaskreislauf des Wärmetauschers zwischen dem letzten (4'') und dem vorletzten Zyklon (3'') angeordnet ist.

5. Anlage nach einem der beiden Ansprüche 1 oder 2, dadurch gekennzeichnet, dass mindestens ein Teil des aus dem zweiten Zyklon (2) des Wärmetauschers austretenden Materials in die den letzten und den vorletzten Zyklon verbindenden Leitung (22) hinter der Verengung (46) eingeführt wird.

6. Anlage zum Herstellen von Zement nach dem Trockenverfahren, bestehend aus einem Zyklonwärmetauscher (10'), einem Vorkalzinierofen (12'), einem Klinkerofen (16') und einem Klinkerkühler (18'), wobei der Zyklonwärmetauscher aus fünf Zyklonen (1', 2', 3', 50, 4') zusammengesetzt ist, die so in Reihe geschaltet sind, dass sie hintereinander durch die Klinkerofengase und in umgekehrter Richtung durch das aufzubereitende Material durchströmt werden und der Materialaustritt des fünften Zyklons (4') des Wärmetauschers, unter Berücksichtigung der Fliessrichtung des aufzubereitenden Materials, mit einer Leitung (38'), die die Klinkerkühlluft dem Vorkalzinierofen zuführt, so verbunden ist, dass dieses Material in den Vorkalzinierofen im Luftstrom schwebend eingeführt wird und das in einem an den Vorkalzinierofen angeschlossenen Zyklon (14') von den Rauchgasen abgeschiedene Material in den Klinkerofen eingeführt wird, dadurch gekennzeichnet, dass der Gasaustritt des an den Vorkalzinierofen angeschlossenen Zyklons (14') mit dem Eintritt des dritten Zyklons (3') des Wärmetauschers verbunden ist.

7. Anlage nach Anspruch 6, dadurch gekennzeichnet, dass mindestens ein Teil des aus dem zweiten Zyklon (2') des Wärmetauschers austretenden Materials in die Leitung (42') eingeführt wird, die den Gasaustritt des an den Vorkalzinierofen angeschlossenen Zyklons (14') mit dem Eintritt des dritten Zyklons (3') verbindet.

8. Anlage zum Herstellen von Zement nach dem Trockenverfahren, bestehend aus einem Zyklonwärmetauscher (10''), einem Vorkalzinierofen (12''), einem Klinkerofen (16'') und einem Klinkerkühler (18''), wobei der Wärmetauscher aus vier Zyklonen (1'', 2'', 3'', 4'') zusammengesetzt ist, die so in Reihe geschaltet sind, dass sie hintereinander durch die Klinkerofenrauchgase und in umgekehrter Richtung durch das aufzubereitende Material durchströmt werden, und der Materialaustritt des letzten Zyklons des Wärmetauschers, unter Berücksichtigung der Fliessrichtung des aufzubereitenden Materials, mit einer Leitung (38''), die die Klinkerkühlluft dem Vorkalzinierofen zuführt, so verbunden ist, dass das Material in den Luftstrom schwebend eingeführt wird, das in einem an den Vorkalzinierofen angeschlossenen Zyklon (14'') von den Rauchgasen abgeschiedene Material in den Klinkerofen eingeführt wird und das aus dem dritten Zyklon austretende Material in eine Leitung (20'') eingeführt wird, die den Klinkerofen mit dem Eintritt des letzten Zyklons (4'') des Wärmetauschers verbindet, dadurch gekennzeichnet, dass der Gasaustritt des letzten Zyklons (4'') des Wärmetauschers mit dem Eintritt des an den Vorkalzinierofen angeschlossenen Zyklons (14'') verbunden ist und der Austritt dieses Zyklons mit dem Eintritt des dritten Zyklons des Wärmetauschers verbunden ist.

FIGURE 1

FIGURE 2

FIGURE 3